# FASCICULE DE BREVET EUROPEEN

(11) **EP 3 405 763 B1**
(45) Date de publication et mention de la délivrance du brevet: **04.12.2019**
(21) Numéro de dépôt: 17702779.4
(22) Date de dépôt: 13.01.2017
(51) Int. Cl.: G01M 3/20, B05B 9/01, B05B 12/00, B05B 1/00

(54) **DISPOSITIF D'ASPERSION ET MODULE DE DÉTECTION DE FUITES**
SPRÜHVORRICHTUNG UND LECKDETEKTIONSMODUL
SPRAY DEVICE AND LEAK DETECTION MODULE

(30) Priorité: 21.01.2016 FR 1650476
(43) Date de publication de la demande: 28.11.2018
(73) Titulaire: Pfeiffer Vacuum, 74000 Annecy (FR)
(72) Inventeur: CHAPRON, Aurélie, 74540 Saint Felix (FR); DEVANCE, Alain, 74410 Saint Jorioz (FR); SCHREINER, Mathieu, 74410 Duingt (FR); NOMINE, Cyrille, 74330 Epagny (FR)
(74) Mandataire: Croonenbroek, Thomas Jakob
(86) Numéro de dépôt international: PCT/EP2017/050722
(87) Numéro de publication internationale: WO 2017/125327

(56) Documents cités:
- CN-U- 201 731 980
- CN-U- 201 731 980
- DE-A1-102007 035 932
- DE-A1-102007 035 932
- JP-A- 2008 101 957
- JP-A- 2008 101 957
- US-A1- 2007 000 310
- US-A1- 2007 000 310

## Description

La présente invention concerne un dispositif d'aspersion pour détection de fuites et un module de détection de fuites comportant le dispositif d'aspersion.

Une méthode connue pour contrôler l'étanchéité d'un objet consiste à réaliser un test dit « en aspersion » de gaz traceur. Cette méthode fait appel à la détection du passage du gaz traceur, généralement de l'Hélium, à travers les éventuelles fuites de l'objet à tester.

En mode d'aspersion, on asperge le gaz traceur sur l'objet à tester avec une soufflette, le volume intérieur de l'objet étant relié à un détecteur de fuites. Les documents JP 2008 101957 et CN 201 731 980 décrivent des exemples de soufflettes d'aspersion.

La recherche de fuites est réalisée en déplaçant l'extrémité de la soufflette autour de l'objet, notamment au niveau des zones susceptibles de présenter des faiblesses d'étanchéité, telles qu'autour des joints d'étanchéité.

Pour s'assurer que de l'hélium, inodore et incolore, soit bien projeté par la soufflette, une technique consiste à approcher l'extrémité de la soufflette près de la bouche. L'utilisateur ressent une légère pression sur ses lèvres en cas de présence de gaz traceur.

Un autre moyen consiste à plonger l'extrémité de la soufflette dans un récipient d'eau. L'utilisateur peut ainsi vérifier la présence du gaz traceur en observant si des bulles se forment dans le liquide.

Une autre méthode pouvant être employée consiste à écouter si un débit de gaz traceur s'échappe bien de la soufflette.

Ces méthodes restent cependant imprécises car liées à la perception qui peut en être faite par l'utilisateur.

Par ailleurs, l'utilisateur peut risquer d'encrasser ou de colmater l'orifice de la soufflette en plongeant la soufflette dans le liquide.

De plus, des concentrations de gaz traceur non négligeables peuvent ainsi être libérées autour de l'objet à tester, notamment lorsque l'utilisateur force le débit de gaz traceur soit pour entendre le jet de gaz traceur, soit pour visualiser les bulles, soit pour ressentir la pression du gaz traceur sur ses lèvres. Ces quantités de gaz libérées augmentent le bruit de fond, ce qui peut nuire à la qualité du contrôle.

Un autre inconvénient est que ces méthodes ne garantissent pas que de l'hélium soit encore projeté par la suite, au cours de la recherche. En effet, après vérification en début de test, l'opérateur peut croire qu'il est bien en train d'asperger l'objet à tester d'hélium alors que plus rien ne s'échappe de la soufflette. Il peut ainsi risquer de manquer une ou plusieurs fuites.

Un des buts de la présente invention est donc de proposer un dispositif d'aspersion pour détection de fuites et un module d'aspersion qui résolvent au moins en partie les inconvénients précités.

A cet effet, l'invention a pour objet un dispositif d'aspersion pour détection de fuites, comprenant:
- un conduit comprenant :
   - une entrée configurée pour être raccordée à une source de gaz traceur, et
   - une sortie,
- une vanne interposée entre l'entrée et la sortie,
- un boitier recevant le conduit et la vanne,
caractérisé en ce que le dispositif d'aspersion comporte :
- au moins une sonde agencée dans le conduit, la sonde étant configurée pour mesurer un paramètre révélateur de la présence du gaz traceur dans le conduit, et
- au moins un dispositif d'information porté par le boitier, configuré pour donner une information de la présence de gaz traceur dans le conduit en relation avec la mesure réalisée par la sonde,
- le dispositif d'aspersion comporte une unité de contrôle configurée pour communiquer avec un détecteur de fuites par communication sans fils.

L'utilisateur peut ainsi s'assurer de façon simple, fiable, rapide et propre, que du gaz traceur est bien soufflé par le dispositif d'aspersion. En outre, une mesure peut être réalisée régulièrement ou continuellement pour éviter que le dispositif d'aspersion n'asperge plus de gaz traceur au cours de la recherche de fuites.

Selon une ou plusieurs caractéristiques du dispositif d'aspersion, prise seule ou en combinaison,
- la sonde est agencée en aval de la vanne dans le sens de circulation des gaz, la sonde comportant un capteur de débit,
- la sonde est agencée en amont de la vanne dans le sens de circulation des gaz, la sonde comportant un capteur de débit ou un capteur de pression,
- le dispositif d'aspersion comporte un dispositif comparateur relié à la sonde et au dispositif d'information, le dispositif comparateur étant configuré pour comparer la mesure de la sonde avec au moins un seuil minimum pour indiquer la présence ou l'absence de gaz traceur dans le conduit en fonction du résultat de la comparaison,

- le dispositif d'information est configuré pour émettre un signal représentatif de la mesure de la sonde,
- le dispositif d'aspersion comporte:
   - un capteur passif configuré pour détecter l'actionnement de la vanne, et
   - une gâchette configurée pour actionner la vanne, la gâchette portant le capteur passif,
- le dispositif d'aspersion comporte un embout agencé à la sortie du conduit et un capteur de proximité agencé à une extrémité de l'embout,
- le dispositif d'information comporte au moins une diode électroluminescente et/ou un écran et/ou un haut-parleur et/ou un actionneur vibratoire,
- le dispositif d'aspersion comporte un dispositif de réglage du débit agencé dans le conduit pour régler le débit de gaz traceur en aval de la vanne,
- le dispositif d'aspersion comporte une unité de contrôle configurée pour communiquer avec un détecteur de fuites par communication sans fils,
- l'unité de contrôle est configurée pour indiquer une information du flux de gaz traceur mesuré par le détecteur de fuites au moyen du dispositif d'information,
- le dispositif d'aspersion comporte une batterie reçue dans le boitier pour alimenter la sonde et le dispositif d'information,
- la sonde est un microsystème de type MEMS.

Un objet de l'invention est un dispositif d'aspersion pour détection de fuites, comprenant:
- un conduit comprenant :
   - une entrée configurée pour être raccordée à une source de gaz traceur, et
   - une sortie,
- une vanne interposée entre l'entrée et la sortie,
- un boitier recevant le conduit et la vanne,
caractérisé en ce que le dispositif d'aspersion comporte :
- au moins une sonde agencée dans le conduit, la sonde étant configurée pour mesurer un paramètre révélateur de la présence du gaz traceur dans le conduit, et
- au moins un dispositif d'information porté par le boitier, configuré pour donner une information de la présence de gaz traceur dans le conduit en relation avec la mesure réalisée par la sonde,
- un capteur passif configuré pour détecter l'actionnement de la vanne, et
- une gâchette configurée pour actionner la vanne, la gâchette portant le capteur passif.

Un autre objet de l'invention est un dispositif d'aspersion pour détection de fuites, comprenant:
- un conduit comprenant :
   - une entrée configurée pour être raccordée à une source de gaz traceur, et
   - une sortie,
- une vanne interposée entre l'entrée et la sortie,
- un boitier recevant le conduit et la vanne,
caractérisé en ce que le dispositif d'aspersion comporte :
- au moins une sonde agencée dans le conduit, la sonde étant configurée pour mesurer un paramètre révélateur de la présence du gaz traceur dans le conduit, et
- au moins un dispositif d'information porté par le boitier, configuré pour donner une information de la présence de gaz traceur dans le conduit en relation avec la mesure réalisée par la sonde,
- un embout agencé à la sortie du conduit et un capteur de proximité agencé à une extrémité de l'embout.

Un autre objet de l'invention est un dispositif d'aspersion pour détection de fuites, comprenant:
- un conduit comprenant :
   - une entrée configurée pour être raccordée à une source de gaz traceur, et
   - une sortie,
- une vanne interposée entre l'entrée et la sortie,
- un boitier recevant le conduit et la vanne,
caractérisé en ce que le dispositif d'aspersion comporte :
- au moins une sonde agencée dans le conduit, la sonde étant configurée pour mesurer un paramètre révélateur de la présence du gaz traceur dans le conduit, et
- au moins un dispositif d'information porté par le boitier, configuré pour donner une information de la présence de gaz traceur dans le conduit en relation avec la mesure réalisée par la sonde,
- une unité de contrôle configurée pour communiquer avec un détecteur de fuites par communication sans fils.

L'invention a aussi pour objet un module de détection de fuites pour tester l'étanchéité d'un objet à tester par aspersion de gaz traceur caractérisé en ce qu'il comporte un dispositif d'aspersion tel que décrit précédemment et une source de gaz traceur comprenant une cartouche de gaz traceur raccordable à l'entrée du conduit du dispositif d'aspersion.

D'autres caractéristiques et avantages de l'invention ressortiront de la description suivante, donnée à titre d'exemple, sans caractère limitatif, en regard des dessins annexés sur lesquels:
- la figure 1 montre une vue schématique d'un exemple de module de détection de fuites pour tester l'étanchéité d'un objet à tester en mode d'aspersion,
- la figure 2 montre une vue schématique d'un autre exemple de module de détection de fuites,
- la figure 3 montre un exemple de sonde, et
- la figure 4 montre une vue schématique d'éléments du dispositif d'aspersion d'un module de détection de fuites.

Sur ces figures, les éléments identiques portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation.

Dans la suite de la description, on utilisera les termes « amont » et « aval » en référence à la direction d'écoulement des gaz de la source de gaz traceur 5 vers l'extrémité de l'embout 11.

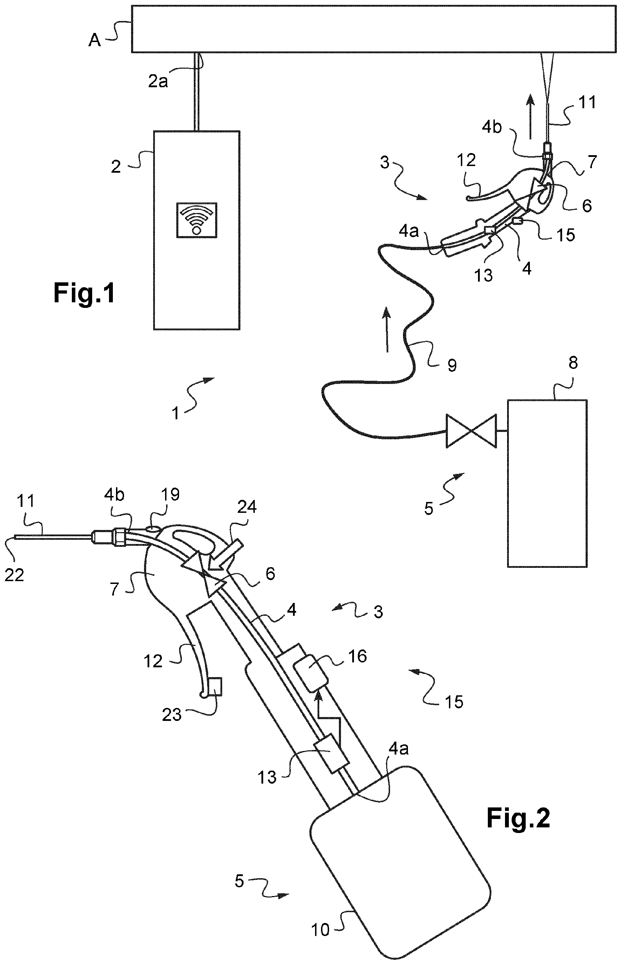

La figure 1 montre un module de détection de fuites 1 pour tester l'étanchéité d'un objet à tester A en mode d'aspersion. L'objet à tester A est raccordé à un détecteur de fuites 2 et éventuellement à un dispositif de pompage auxiliaire (non représenté).

Le module de détection de fuites 1 comprend un dispositif d'aspersion 3 comportant un conduit 4, une vanne 6 interposée entre une entrée 4a et une sortie 4b du conduit 4, le dispositif d'aspersion 3 comportant en outre un boitier 7 portable recevant notamment le conduit 4 et la vanne 6.

L'entrée 4a du conduit 4 est raccordée à une source de gaz traceur 5, telle qu'une bouteille de gaz traceur 8 via une canalisation flexible 9 (figure 1) ou telle qu'une cartouche de gaz traceur 10 (figure 2), pouvant être rechargeable, et raccordée à l'entrée 4a du conduit 4, par exemple via un raccord rapide.

L'hélium ou l'hydrogène est généralement utilisé comme gaz traceur car ces gaz traversent les petites fuites plus aisément que les autres gaz, du fait de la petite taille de leur molécule et de leur grande vitesse de déplacement.

La sortie 4b du conduit 4 est raccordée à un embout 11 amovible permettant de souffler un jet de gaz traceur. L'embout 11 comporte par exemple un tube métallique, long et fin pour faciliter l'accès aux zones de recherches de petites dimensions.

La vanne 6 peut être actionnée par une gâchette 12 du dispositif d'aspersion 3, le boîtier 7 présentant par exemple une forme de pistolet. La gâchette 12 est manipulable par l'utilisateur de sorte que son actionnement ouvre la vanne 6 permettant la projection d'un jet de gaz traceur à l'extrémité de l'embout 11.

On recherche la présence éventuelle du gaz traceur en déplaçant l'embout 11 autour de l'objet à tester A pour l'asperger de gaz traceur. L'entrée 2a du détecteur de fuites 2 prélève une partie des gaz contenus dans l'objet à tester A. Une partie des gaz ainsi prélevés, contenant éventuellement le gaz traceur révélateur d'une fuite, est alors analysée par un analyseur de gaz du détecteur 2 tel qu'un spectromètre de masse, qui fournit un signal de mesure du flux de gaz traceur. La localisation du détecteur de fuites 2 où est réalisée la mesure et la position du dispositif d'aspersion 3 peuvent être relativement éloignées l'une de l'autre.

Comme on peut mieux le voir sur la figure 2, le dispositif d'aspersion 3 comporte en outre au moins une sonde 13 agencée dans le conduit 4 et au moins un dispositif d'information 15 porté par le boitier 7. La sonde 13 est configurée pour mesurer un paramètre révélateur de la présence du gaz traceur, tel que la pression ou le débit. Le dispositif d'information 15 est configuré pour donner une information sur la présence du gaz traceur dans le conduit 4 en relation avec la mesure réalisée par la sonde 13.

L'utilisateur peut ainsi s'assurer de façon simple, fiable, rapide et propre, que du gaz traceur est bien soufflé par le dispositif d'aspersion 3. En outre, une mesure peut être réalisée régulièrement ou continuellement pour éviter que le dispositif d'aspersion 3 n'asperge plus de gaz traceur au cours de la recherche de fuites.

La sonde 13 comporte par exemple un capteur de pression tel qu'un capteur de pression différentielle. Le capteur de pression différentielle comporte une première entrée configurée pour mesurer la pression dans le conduit 4 et une deuxième entrée configurée pour mesurer la pression extérieure (atmosphérique). Si la différence de pression entre la première et la deuxième entrée est supérieure à un seuil minimal alors le flux de gaz traceur est suffisant pour conclure à la présence de gaz traceur dans le conduit 4.

La sonde 13 peut comporter un capteur de débit, par exemple basé sur le principe de mesure de température différentielle, la prise de température étant réalisée en deux endroits espacés l'un de l'autre le long du conduit 4.

La sonde 13 peut être agencée en aval de la vanne 6 dans le sens de circulation des gaz, la sonde 13 étant alors un capteur de débit.

La sonde 13 peut être agencée en amont de la vanne 6 dans le sens de circulation des gaz, la sonde 13 étant un capteur de débit ou un capteur de pression.

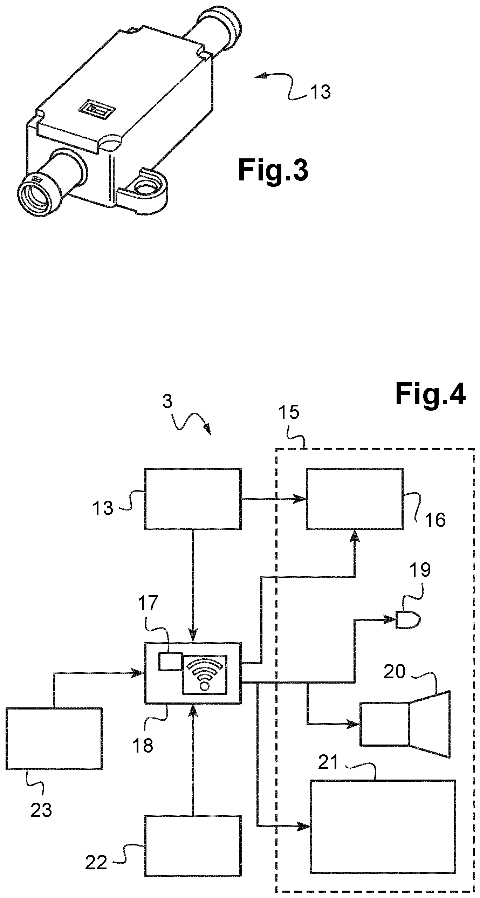

La sonde 13 est par exemple un microsystème de type MEMS (pour « microsystème électromécanique ») (figure 3), c'est-à-dire comprenant au moins une structure présentant des dimensions micrométriques ; la fonction de la sonde 13 étant en partie assurée par la forme de cette structure. La miniaturisation des composants électroniques (moins de 10mm de long par exemple pour une sonde du commerce) permet l'intégration de la sonde 13 dans le boîtier 7 du dispositif d'aspersion 3 portable. La consommation électrique des MEMS est faible et donc compatible avec l'utilisation d'une batterie reçue dans le boitier 7.

Le dispositif d'information 15 peut émettre un signal représentatif de la mesure de la sonde 13. Le dispositif d'information 15 comporte par exemple un écran 16, tel que digital ou à cristaux liquides (LCD pour « liquid crystal display » en anglais) relié à la sonde 13 pour afficher directement les valeurs de pression ou débit mesurés par la sonde 13 (figure 4). L'utilisateur est ainsi informé avec précision de la quantité de gaz traceur circulant dans le conduit 4.

On peut aussi prévoir que le dispositif d'aspersion 3 comporte un dispositif comparateur 17 relié à la sonde 13 et au dispositif d'information 15. Le dispositif comparateur 17 est configuré pour comparer la mesure de la sonde 13 avec au moins un seuil minimum pour indiquer la présence ou l'absence de gaz traceur dans le conduit 4 en fonction du résultat de la comparaison.

Le dispositif comparateur 17 peut également être configuré pour comparer la mesure de la sonde 13 avec au moins un seuil maximum pour indiquer lorsque le conduit 4 présente un flux ou une pression de gaz traceur trop important(e).

Le dispositif comparateur 17 comporte par exemple un circuit électronique comprenant un comparateur.

Selon un autre exemple, le dispositif comparateur 17 est réalisé par une unité de contrôle 18 du dispositif d'aspersion 3, telle qu'un microcontrôleur, programmé pour comparer la mesure de la sonde 13 avec au moins un seuil minimum pour indiquer la présence ou l'absence de gaz traceur dans le conduit 4 en fonction du résultat de la comparaison.

L'unité de contrôle 18 peut comporter un module de communication sans fils de type WIFI, Bluetooth ou autre, pour communiquer avec le détecteur de fuites 2 par communication sans fils. Le module de communication sans fils ainsi que la batterie nécessaire à l'alimentation des différents composants électriques ou électroniques, notamment pour alimenter la sonde 13 et le dispositif d'information 15, sont reçus dans le boitier 7.

L'unité de contrôle 18 peut alors recevoir un signal de mesure du flux de gaz traceur dans l'objet à tester A et/ou une information de l'état du détecteur de fuites 2 et indiquer ces informations à l'utilisateur au moyen du dispositif d'information 15. L'information de l'état du détecteur 2, à savoir si le détecteur de fuites 2 est en train de réaliser une mesure, permet par exemple à l'utilisateur ne pouvant pas visualiser directement le détecteur de fuites 2, de s'assurer qu'il est bien en train de faire une mesure pour conclure à l'absence de fuites en présence d'un signal de mesure faible ou nul.

L'avantage de pouvoir reporter les informations du détecteur de fuites 2 au niveau du dispositif d'aspersion 3 et donc, au niveau de l'utilisateur le manipulant, est que cela permet à l'utilisateur de connaitre le flux de gaz traceur mesuré dans l'objet à tester A à l'endroit où il asperge l'objet à tester A de gaz traceur.

L'unité de contrôle 18 peut aussi être configurée pour piloter le lancement d'une mesure du flux de gaz traceur et/ou l'annulation du bruit de fond du détecteur de fuites 2. L'annulation du bruit de fond permet d'attribuer une valeur nulle à une mesure du flux de gaz traceur. En soustrayant le bruit de fond à la valeur de flux de gaz traceur mesurée, on augmente la sensibilité de mesure. Cela permet de déceler plus facilement la présence d'une fuite lorsque le niveau du bruit de fond est élevé sans attendre une baisse du niveau de gaz traceur et sans ventiler l'atmosphère.

Le dispositif d'information 15 peut être visuel, sonore ou tactile. Le dispositif d'information 15 visuel est par exemple agencé sur le dos du boitier 7 de manière à être visible par l'utilisateur lorsque celui-ci actionne la gâchette 12.

Le dispositif d'information 15 comporte par exemple au moins une diode électroluminescente 19 (DEL ou LED pour « Light-Emitting Diode » en anglais) et une pile d'alimentation de la LED 19, telle qu'une pile plate Lithium. On peut agencer plusieurs LED monochromes ou une LED multicolore.

L'unité de contrôle 18 peut être configurée pour appliquer un code couleur permettant d'informer l'utilisateur du niveau du flux de gaz traceur. Par exemple, la LED est éclairée en rouge (continu ou clignotement) lorsque le flux ou la pression est faible ou nul(le) et éclairée en vert lorsque le flux ou la pression est à un niveau correct. Il est également possible de faire clignoter une LED par exemple lorsque la pression ou le débit est supérieur au seuil maximum.

Le dispositif d'information 15 comporte par exemple un haut-parleur 20. L'unité de contrôle 18 peut être configurée pour appliquer un code sonore pour informer l'utilisateur du niveau du flux de gaz traceur. Le code sonore peut comporter un premier motif sonore indiquant que le flux ou la pression est faible ou nul(le), un second motif sonore lorsque le flux ou la pression est à un niveau correct et un troisième motif sonore lorsque la pression ou le débit est supérieur au seuil maximum. Le haut-parleur 20 porté par le boitier 7 peut également être utilisé par l'unité de contrôle 18 le cas échéant, pour indiquer le niveau de fuites mesuré par le détecteur de fuites 2.

Le dispositif d'information 15 peut comporter au moins un actionneur vibratoire 21. L'unité de contrôle 18 peut être configurée pour appliquer un code vibratoire informant l'utilisateur du niveau de flux de gaz traceur dans le conduit 4 avec différents motifs vibratoires. L'actionneur vibratoire 21 porté par le boitier 7 peut également être utilisé par l'unité de contrôle 18 le cas échéant, pour indiquer le niveau de fuites mesuré par le détecteur de fuites 2.

Le dispositif d'aspersion 3 peut également comporter un capteur de proximité 22, tel qu'un capteur capacitif, agencé à l'extrémité de l'embout 11. Dans le cas d'une communication du dispositif d'aspersion 3 avec le détecteur de fuites 2, le capteur de proximité 22 est configuré pour fournir un signal de sortie à l'unité de contrôle 18. Il est alors possible de corréler la proximité de l'embout 11 avec l'objet à tester A, avec la mesure du flux de gaz traceur dans l'objet à tester A. Cela permet de faciliter et de valider la détection et la localisation d'une fuite de l'objet à tester A. Egalement, le capteur de proximité 22 peut permettre à l'unité de contrôle 18 de valider qu'un nombre prédéfini de positions sur l'objet à tester A ont bien été testées, ce qui peut être utile pour un contrôle qualité notamment pour des tests réalisés en production.

Le dispositif d'aspersion 3 peut également comporter un capteur passif 23 porté par la gâchette 12. Le capteur passif 23, tel qu'un capteur résistif ou capacitif, est configuré pour détecter un actionnement de la gâchette 12 par l'utilisateur et fournir un signal de sortie à l'unité de contrôle 18. Le signal de sortie peut permettre de déclencher une mesure du flux de gaz traceur dans l'objet à tester A par le détecteur de fuites 2 lorsque l'unité de contrôle 18 a détecté que l'utilisateur a appuyé sur la gâchette 12.

Le dispositif d'aspersion 3 peut également comporter un dispositif de réglage du débit 24 agencé dans le conduit 4, pour modifier le débit de gaz en aval de la vanne 6. Le dispositif de réglage du débit 24 peut comporter une vanne additionnelle réglable, par exemple manuellement, agencée en aval de la vanne 6. Alternativement, la vanne 6 permettant la fermeture et l'ouverture du conduit 4 peut être configurée pour permettre à l'utilisateur de régler le débit dans le conduit 4. Le débit de gaz traceur peut ainsi être limité à un niveau faible en fonction des indications données par le dispositif d'information 15, ce qui permet de limiter le bruit de fond en gaz traceur.

## Revendications

1. Dispositif d'aspersion (3) pour détection de fuites, comprenant:
- un conduit (4) comprenant :
- une entrée (4a) configurée pour être raccordée à une source de gaz traceur (5), et
- une sortie (4b),
- une vanne (6) interposée entre l'entrée (4a) et la sortie (4b),
- un boitier (7) recevant le conduit (4) et la vanne (6),
**caractérisé en ce que** le dispositif d'aspersion (3) comporte :
- au moins une sonde (13) agencée dans le conduit (4), la sonde (13) étant configurée pour mesurer un paramètre révélateur de la présence du gaz traceur dans le conduit (4),
- au moins un dispositif d'information (15) porté par le boitier (7), configuré pour donner une information de la présence de gaz traceur dans le conduit (4) en relation avec la mesure réalisée par la sonde (13), et
- une unité de contrôle (18) configurée pour communiquer avec un détecteur de fuites (2) par communication sans fils.

2. Dispositif d'aspersion (3) selon la revendication précédente, **caractérisé en ce que** la sonde (13) est agencée en aval de la vanne (6) dans le sens de circulation des gaz, la sonde (13) comportant un capteur de débit.

3. Dispositif d'aspersion (3) selon l'une des revendications précédentes, **caractérisé en ce que** la sonde (13) est agencée en amont de la vanne (6) dans le sens de circulation des gaz, la sonde (13) comportant un capteur de débit ou un capteur de pression.

4. Dispositif d'aspersion (3) selon l'une des revendications précédentes, **caractérisé en ce qu'**il comporte un dispositif comparateur (14) relié à la sonde (13) et au dispositif d'information (15), le dispositif comparateur (14) étant configuré pour comparer la mesure de la sonde (13) avec au moins un seuil minimum pour indiquer la présence ou l'absence de gaz traceur dans le conduit (4) en fonction du résultat de la comparaison.

5. Dispositif d'aspersion (3) selon l'une des revendications précédentes, **caractérisé en ce que** le dispositif d'information (15) est configuré pour émettre un signal représentatif de la mesure de la sonde (13).

6. Dispositif d'aspersion (3) selon l'une des revendications précédentes, **caractérisé en ce qu'**il comporte:
- un capteur passif (23) configuré pour détecter l'actionnement de la vanne (6), et
- une gâchette (12) configurée pour actionner la vanne (6), la gâchette (12) portant le capteur passif (23).

7. Dispositif d'aspersion (3) selon l'une des revendications précédentes, **caractérisé en ce qu'**il comporte un embout (11) agencé à la sortie (4b) du conduit (4) et un capteur de proximité (22) agencé à une extrémité de l'embout (11).

8. Dispositif d'aspersion (3) selon l'une des revendications précédentes, **caractérisé en ce que** le dispositif d'information (15) comporte au moins une diode électroluminescente (19) et/ou un écran (16) et/ou un haut-parleur (20) et/ou un actionneur vibratoire (21).

9. Dispositif d'aspersion (3) selon l'une des revendications précédentes, **caractérisé en ce qu'**il comporte un dispositif de réglage du débit (24) agencé dans le conduit (4) pour régler le débit de gaz traceur en aval de la vanne (6).

10. Dispositif d'aspersion (3) selon l'une des revendications précédentes, **caractérisé en ce que** l'unité de contrôle (18) est configurée pour indiquer une information du flux de gaz traceur mesuré par le détecteur de fuites (2) au moyen du dispositif d'information (15).

11. Dispositif d'aspersion (3) selon l'une des revendications précédentes, **caractérisé en ce qu'**il comporte une batterie reçue dans le boitier (7) pour alimenter la sonde (13) et le dispositif d'information (15).

12. Dispositif d'aspersion (3) selon l'une des revendications précédentes, **caractérisé en ce que** la sonde (13) est un microsystème de type MEMS.

13. Module de détection de fuites (1) pour tester l'étanchéité d'un objet à tester par aspersion de gaz traceur **caractérisé en ce qu'**il comporte un dispositif d'aspersion (3) selon l'une des revendications précédentes et une source de gaz traceur (5) comprenant une cartouche de gaz traceur (10) raccordable à l'entrée (4a) du conduit (4) du dispositif d'aspersion (3).

## Patentansprüche

1. Sprühvorrichtung (3) zur Detektion von Lecks, welche umfasst:
- eine Leitung (4), welche umfasst:
- einen Eingang (4a), der dafür ausgelegt ist, an eine Prüfgasquelle (5) angeschlossen zu werden,
- einen Ausgang (4b),
- ein Ventil (6), das zwischen dem Eingang (4a) und dem Ausgang (4b) angeordnet ist,
- ein Gehäuse (7), das die Leitung (4) und das Ventil (6) aufnimmt,
**dadurch gekennzeichnet, dass** die Sprühvorrichtung (3) aufweist:
- wenigstens eine in der Leitung (4) angeordnete Sonde (13), wobei die Sonde (13) dafür ausgelegt ist, einen Parameter zu messen, der das Vorhandensein des Prüfgases in der Leitung (4) offenbart,
- wenigstens eine von dem Gehäuse (7) getragene Informationsvorrichtung (15), die dafür ausgelegt ist, eine Information über das Vorhandensein von Prüfgas in der Leitung (4) im Zusammenhang mit der von der Sonde (13) durchgeführten Messung zu liefern, und
- eine Steuereinheit (18), die dafür ausgelegt ist, mit einem Leckdetektor (2) drahtlos zu kommunizieren.

2. Sprühvorrichtung (3) nach dem vorhergehenden Anspruch, **dadurch gekennzeichnet, dass** die Sonde (13) stromabwärts des Ventils (6) in der Strömungsrichtung der Gase angeordnet ist, wobei die Sonde (13) einen Durchflusssensor umfasst.

3. Sprühvorrichtung (3) nach einem der vorhergehenden Ansprüche, **dadurch gekennzeichnet, dass** die Sonde (13) stromaufwärts des Ventils (6) in der Strömungsrichtung der Gase angeordnet ist, wobei die Sonde (13) einen Durchflusssensor oder einen Drucksensor aufweist.

4. Sprühvorrichtung (3) nach einem der vorhergehenden Ansprüche, **dadurch gekennzeichnet, dass** sie eine Vergleichsvorrichtung (14) umfasst, die mit der Sonde (13) und mit der Informationsvorrichtung (15) verbunden ist, wobei die Vergleichsvorrichtung (14) dafür ausgelegt ist, den Messwert der Sonde (13) mit wenigstens einem minimalen Schwellenwert zu vergleichen, um in Abhängigkeit von Ergebnis des Vergleichs das Vorhandensein oder das Nichtvorhandensein von Prüfgas in der Leitung (4) anzuzeigen.

5. Sprühvorrichtung (3) nach einem der vorhergehenden Ansprüche, **dadurch gekennzeichnet, dass** die Informationsvorrichtung (15) dafür ausgelegt ist, ein Signal auszusenden, das für den Messwert der Sonde (13) repräsentativ ist.

6. Sprühvorrichtung (3) nach einem der vorhergehenden Ansprüche, **dadurch gekennzeichnet, dass** sie aufweist:
- einen passiven Sensor (23), der dafür ausgelegt ist, die Betätigung des Ventils (6) zu detektieren, und
- einen Drücker (12), der dafür ausgelegt ist, das Ventil (6) zu betätigen, wobei der Drücker (12) den passiven Sensor (23) trägt.

7. Sprühvorrichtung (3) nach einem der vorhergehenden Ansprüche, **dadurch gekennzeichnet, dass** sie ein Ansatzstück (11), das am Ausgang (4b) der Leitung (4) angeordnet ist, und einen Näherungssensor (22), der an einem Ende des Ansatzstücks (11) angeordnet ist, aufweist.

8. Sprühvorrichtung (3) nach einem der vorhergehenden Ansprüche, **dadurch gekennzeichnet, dass** die Informationsvorrichtung (15) wenigstens eine Leuchtdiode (19) und/oder einen Bildschirm (16) und/oder einen Lautsprecher (20) und/oder einen Vibrationsaktuator (21) aufweist.

9. Sprühvorrichtung (3) nach einem der vorhergehenden Ansprüche, **dadurch gekennzeichnet, dass** sie eine Vorrichtung zur Regelung des Durchflusses (24) aufweist, die in der Leitung (4) angeordnet ist, um den Durchfluss von Prüfgas stromabwärts des Ventils (6) zu regeln.

10. Sprühvorrichtung (3) nach einem der vorhergehenden Ansprüche, **dadurch gekennzeichnet, dass** die Steuereinheit (18) dafür ausgelegt ist, eine Information über den Strom von Prüfgas, der von dem Leckdetektor (2) gemessen wurde, mittels der Informationsvorrichtung (15) anzuzeigen.

11. Sprühvorrichtung (3) nach einem der vorhergehenden Ansprüche, **dadurch gekennzeichnet, dass** sie eine in dem Gehäuse (7) aufgenommene Batterie zur Stromversorgung der Sonde (13) und der Informationsvorrichtung (15) aufweist.

12. Sprühvorrichtung (3) nach einem der vorhergehenden Ansprüche, **dadurch gekennzeichnet, dass** die Sonde (13) ein Mikrosystem vom Typ MEMS ist.

13. Leckdetektionsmodul (1) zum Prüfen der Dichtheit eines Prüfobjekts durch Besprühen mit Prüfgas, **dadurch gekennzeichnet, dass** es eine Sprühvorrichtung (3) nach einem der vorhergehenden Ansprüche und eine Prüfgasquelle (5), die eine Patrone mit Prüfgas (10) umfasst und an den Eingang (4a) der Leitung (4) der Sprühvorrichtung (3) anschließbar ist, aufweist.

## Claims

1. Spray device (3) for detecting leaks, comprising:
- a duct (4) comprising:
- an inlet (4a) configured to be connected to a tracer gas source (5), and
- an outlet (4b),
- a valve (6) interposed between the inlet (4a) and the outlet (4b),
- a casing (7) receiving the duct (4) and the valve (6),
**characterized in that** the spray device (3) comprises:
- at least one probe (13) arranged in the duct (4), the probe (13) being configured to measure a parameter revealing the presence of the tracer gas in the duct (4),
- at least one information device (15) borne by the casing (7), configured to give information on the presence of tracer gas in the duct (4) in relation to the measurement performed by the probe (13), and
- a control unit (18) configured to communicate with a leak detector (2) by wireless communication.

2. Spray device (3) according to the preceding claim, **characterized in that** the probe (13) is arranged downstream of the valve (6) in the direction of circulation of the gases, the probe (13) comprising a flow rate sensor.

3. Spray device (3) according to either of the preceding claims, **characterized in that** the probe (13) is arranged upstream of the valve (6) in the direction of circulation of the gases, the probe (13) comprising a flow rate sensor or a pressure sensor.

4. Spray device (3) according to one of the preceding claims, **characterized in that** it comprises a comparator device (14) linked to the probe (13) and to the information device (15), the comparator device (14) being configured to compare the measurement of the probe (13) with at least one minimum threshold for indicating the presence or the absence of tracer gas in the duct (4) based on the result of the comparison.

5. Spray device (3) according to one of the preceding claims, **characterized in that** the information device (15) is configured to emit a signal representative of the measurement of the probe (13).

6. Spray device (3) according to one of the preceding claims, **characterized in that** it comprises:
- a passive sensor (23) configured to detect the actuation of the valve (6), and
- a trigger (12) configured to actuate the valve (6), the trigger (12) bearing the passive sensor (23).

7. Spray device (3) according to one of the preceding claims, **characterized in that** it comprises an end-fitting (11) arranged at the outlet (4b) of the duct (4) and a proximity sensor (22) arranged at one end of the end-fitting (11).

8. Spray device (3) according to one of the preceding claims, **characterized in that** the information device (15) comprises at least one light-emitting diode (19) and/or a screen (16) and/or a loudspeaker (20) and/or a vibratory actuator (21).

9. Spray device (3) according to one of the preceding claims, **characterized in that** it comprises a flow rate adjustment device (24) arranged in the duct (4) for adjusting the flow rate of tracer gas downstream of the valve (6).

10. Spray device (3) according to one of the preceding claims, **characterized in that** the control unit (18) is configured to indicate information on the flow of tracer gas measured by the leak detector (2) by means of the information device (15).

11. Spray device (3) according to one of the preceding claims, **characterized in that** it comprises a battery accommodated in the casing (7) to power the probe (13) and the information device (15).

12. Spray device (3) according to one of the preceding claims, **characterized in that** the probe (13) is a microsystem of MEMS type.

13. Leak detection module (1) for testing the seal-tightness of an object to be tested by spraying tracer gas, **characterized in that** it comprises a spray device (3) according to one of the preceding claims and a tracer gas source (5) comprising a tracer gas cartridge (10) that can be connected to the inlet (4a) of the duct (4) of the spray device (3).
